# EUROPEAN PATENT SPECIFICATION

(11) **EP 0 541 136 B1**
(45) Date of publication and mention of the grant of the patent: **24.01.1996**
(21) Application number: 92200852.9
(22) Date of filing: 25.03.1992
(51) Int. Cl.: B62M 1/16

(54) **Mechanism to convert the front idle wheels of bicycles in general into drive wheels**
Mechanismus zum Transformieren von nicht-angetriebenen Vorderrädern von Fahrrädern im allgemeinen, in angetriebene Vorderrädern
Mécanisme pour convertir les roues avant folles de bicyclettes, en général, en roues d'entraînement

(30) Priority: 06.11.1991 IT TO910084
(43) Date of publication of application: 12.05.1993
(73) Proprietor: Bono, Francesco, San Rocco di Bernezzo (Cuneo) (IT); Garelli, Paolo, Centallo (Cuneo) (IT); Lerda, Luigi, Busca (Cuneo) (IT)
(72) Inventor: Bono, Francesco, San Rocco di Bernezzo (Cuneo) (IT); Garelli, Paolo, Centallo (Cuneo) (IT); Lerda, Luigi, Busca (Cuneo) (IT)
(74) Representative: de Blasio, Francesco, Dipl.-Ing.

(56) References cited:
- WO-A-90/03302
- DE-A- 892 421
- DE-A- 2 719 846
- FR-A- 1 028 272
- GB-A- 426 044
- US-A- 2 547 600
- US-A- 4 548 420

## Description

This invention concerns a lever mechanism, fixed to the handle-bar and hinged to the front fork, which converts the front idle wheel of bycicles in general into drive wheels by means of the movement of the cyclist's arms, as defined in the first part of claim 1; a bicycle having these features is shown in GB-A-426044
Some mechanisms in which the handle-bar movement is transmitted to the bycicle front wheel, are known.
- As far as the US patent No. 2,547,600 is concerned, a gear mechanism applied to the handle-bar, actionable through alternated movements on the horizontal plane and transmitted to a free wheel, coaxial to the front wheel, is known.
- As far as the GB patent No. 426,044 is concerned, a mechanism where the alternated movement of opposite handle-bar handgrips around the same horizontal axis is transmitted through three gear wheels and chains, to a free wheel, coaxial to the bycicle front wheel, is known.
- The DE patent No. 892,421 includes a mechanism in which the handle-bar is mounted as swingable on the vertical plane and, through a rack-lever, actionates the front wheel of a scooter.
- As far as the publication WO 90/03302 is concerned, a mechanism allowing to change the handle-bar position by means of a movable part articulated on a fixed piece through a stop pawl engaging different pieces of a fixed part, is known.
- As far as the US patent No. 4,548,420 is concerned a mechanism in which the handle-bar is integral to a crank articulated to a connecting rod making rotate a gear wheel supported by a chassis mounted in front of the front fork, is known. The above gear wheel with chain is connected to a free wheel, coaxial to the front wheel of a bycicle.
- As far as the French patent No. 1,082,272 is concerned, a mechanism with handle-bar handgrips around its horizontal axis is known. Chains and return springs transmit the movement to two opposite free wheels, coaxial to the front wheel of bycicles.
- The target of the German patent No. 27 19 846 is a mechanism where a second handle-bar is articulated to the normal bycicle handle-bar. The second handle-bar with a transversal arm, protruding towards the ride direction, articulated to a connecting rod and throw system, operates a free wheel coaxial to the bycicle front wheel.

Mechanisms known till now usually are bulky, increase the bycicle total weight and change the bycicle aesthetical aspect.

The purpose of the invention is to supply a less clumsy, light weight mechanism, which can be easily set into motion or neutralised and which can be applied to any type of bycicles, constructed in such a way as to leave the overall appearance unaltered.

The mechanism can be advantageously used on bycicles in general, particularly if these aren't to be ridden only on roads of asphalt or with hard earth surfaces but also on off-the-road itineraries for which, as it is known, special bycicles called "mountain-bikes" are used.

The mechanism is characterized by the features of the second part of claim 1 and essentially comprises a lever hinged to the front fork and having its top fixed to the handle bar which can be swung in e.g. the vertical plane, and transmission means for the alternate motion of the handle-bar to the front wheel.

More specifically, the driven part of at least one free wheel is solidly fixed to the front wheel, the driving crown of said free wheel being engaged by a chain, one end of which may be connected to a return spring while the opposite end is connected to the extremity of said lever fixed to the handle-bar, which can be set into pendular motion by the pressure of tcyclist's arm muscles.

Another characteristic of the mechanism derives from the fact that the width of the angular movement which can be set for the handle-bar is adjustable, withing preset limits, so that it is proportional to the degree of slope and roughness of the road surface as well as to the physical energy available.

Furthermore, the mechanism includes locking/unlocking means for fixing/removing it to/from the handle-bar, in two different positions.

The advantages deriving from the use of the mechanism according to the invention, and said mechanism offers limited weight and production costs, are considerable both for bycicles in use on rough surfaces and for bycicles used on normal roads as well as for the well-known "cyclettes" used for physical exercise.

The invention described detailed below with reference to the axonometrical drawings attached for illustrative purposes in which the different figures are on a variable scale.
- Figure 1, on a reduced scale, represents a bycicle equipped with the mechanism according to the invention;
- Figure 2 is a view on a larger scale of the front part of the bycicle in Figure 1;
- Figure 3 is another view of the same front part considered from a different angle, with the handle-bar both in normal position and in swung position;
- Figure 4 is a further view only of the front part of the bycicle considered from a different angle than that in Figures 2 and 3;
- Figure 5 is a side view reled to the front stopping means at the end of the return run of the handle-bar.

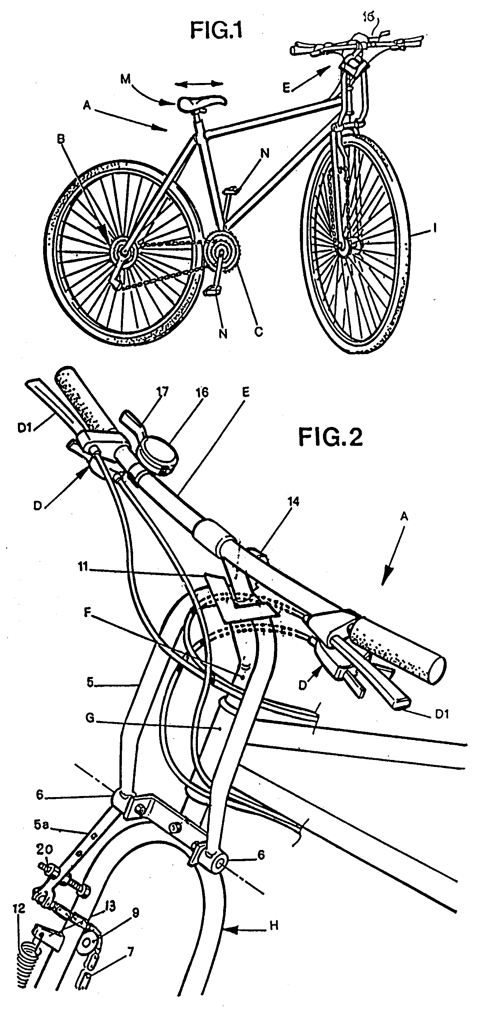

In the drawings, Figure 1 to 4, to the handle-bar - E - of a bycicle stated as a whole by -A-, 1, 2, as it is known, command levers -D, D1 - are applied for controlling the gear -B, C - and the brakes on the wheels.

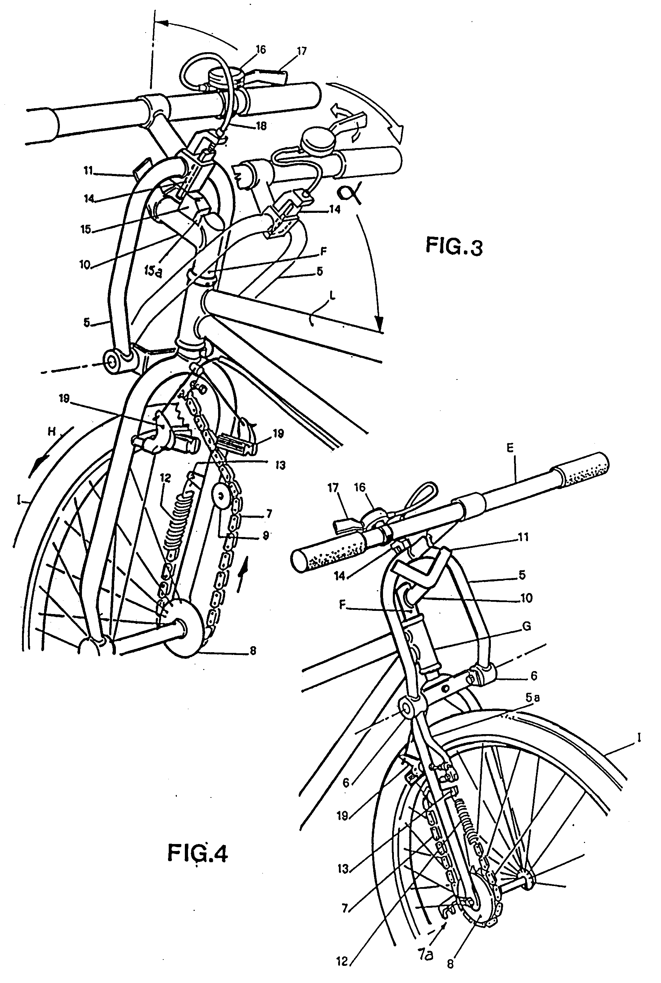

According to the invention, the handle-bar - E -, of any suitable form, is fixed to the top of an up-side-down "U" shaped lever 5 hinged revolving in 6 with respect to the sides of the front fork - H -. In the shown case, the lever 5 is equipped with asymmetrical branches, whose one, 5a, is longer and whose extremity is hinged to one of the ends in the portion of the chain 7 which engages the toothed driving crown of a free wheel 8, Figure 4; it passes astride an idler pulley 9 and is fixed to a return spring 12, anchored in 13 with respect to the fork -H-.

The driven part of the free wheel 8 is coaxially fixed to the front wheel - I -.

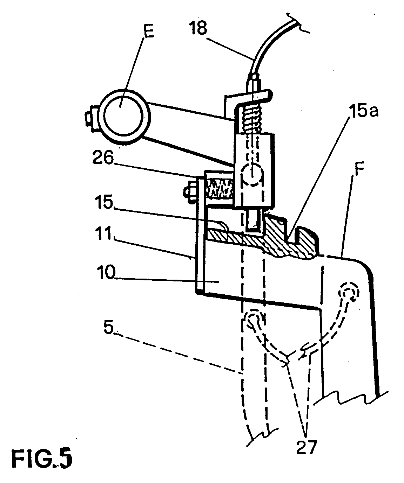

The steering column - F - is equipped with an angled part 10, Figures 2, 3 and 4, equipped with stopping means 1 which define the front position of the lever 5 and of the handle-bar - E -. The stopping means 11, Figure 5, can be advantageously equipped with a block 26 in a moderate elastic material or with a spring in order to allow for a slight swing of the handle-bar when this is in a normal position.

The lever 5, together with the handle-bar -E-, oscillated around the transverse axis of the hinging point 6 and can be blocked with respect to the fork - H - between the stopping means 11 and the mobile tooth of a catch 14, fixed to the lever 5. The tooth of said catch, under the thrust of elastic means, frontally engages fixed stopping means 15 attached to the steering column -F-. In this case the handle-bar is blocked in the normal running position. If the tooth of the catch springs into the notch 15a, Figure 3, the handle-bar takes up a position further back which is more suitable for riding downhill. A control box, 16, 17, is applied to the handle-bar - E -, said organ having two fixed positions, with a "Bowden" cable for the return, with respect to its release, of the mobile tooth of the catch 14, Figure 3.

The maximum width of the swinging movement that can be set to the handle-bar is defined by an angle - α - whose limits are set by the stopping means 11 and by the fixing cable 27, in steel, Figure 5, of a suitable length, connected to the element - F - and to the swing lever 5, respectively.

The saddle - M - Figure 1, is equipped with a control organ, underneath its cover, allowing its adjustment, not only in height but also longitudinally, so as to be adapted to the cyclist's height and also to the width of the angular movement that can be given to the handle-bar. In figure 3, 19 indicates one of the two shoes of the brake for the front wheel mounted beside the fork - H - both so as not to interfere with the chain 7 and the spring 12 and because, in this position, the braking action radially imposed on the tyre of the wheel - I - is considerably improved.

In Figure 2, 20 indicates an adjustable end of run for the branch 5a of the part 5. Substantially, the handle-bar - E -, the part 5 fixed to it and the part 5a make up a first kind lever for setting the front wheel - I - into motion.

The mechanism works by intuition; in fact when the cyclist so desires, by manouvering the lever 17 of the control 16, he removes the handle-bar - E - from the stopping means 15 and, after adjusting the longitudinal position of the saddle - M -, he applies an adequate traction to the handle-bar making it oscillate in the opposite direction with respect to the direction of the run. This movement, which constitutes the active phase of each cycle of activation of the front wheel - I -, by means of the lever 5, 5a, chain 7 and free wheel 8, is transmitted to the front wheel - I - in the form of driving power which is added to the driving power transmitted to the rear wheel by means of the pedals - N -. When the active oscillation ceases, so does the traction applied to the handle-bar. The reaction of the spring 12, previously extended, causes the rapid return of the handle-bar and the part 5 against the stopping means 11 or block 26; this second phase, inactive for the running speed allowed by the front free wheel 8, defines one of a plurality of work cycles.

In order to return to normal running only using pedals, it is sufficient to manouver the control 16, 17 and unblock the tooth of the catch 14. When the handle-bar reaches the initial position, with the part 5 against the stopping means 11 or block 26, the tooth of the catch, pushed by a spring, clicks into the notch 15 or 15a ans so remains blocked in the position of normal use with respect to the fork - H -.

Also the free front wheel 8 works to avoid the spontaneous reverse of the bycicle.

This is particularly an advantage when riding uphill.

A bracket 7a is anyway fixed to the front fork - H -, Figure 4. If one desires to neutralise the action of the free wheel 8, it is sufficient to unblock the chain 7 from said free wheel and place it on the bracket 7a.

The spring 12 facilitates the removal and/or remounting of the chain on the free wheel 8.

In Figure 5, 26 indicates an elastic organ such as a block in elastomeric material or a suitably shaped and structured spring, acting as an end or run and damper for the impact of the handle-bar -E- during the angular return movement. Furthermore, the position of the handle-bar shown at Figure 5 is advantageous for downhill riding in the meaning that the damping capacity of the organ 26 absorbs most of the vibrations generated by the front wheel in contact with the roughness of the ground. These damped vibrations are transmitted by the handle-bar to the yclist's hands and arms.

27 indicates a flexible steel cable, with an adjustable length whose opposite ends are anchored to the lever 5 and to the steering column -F- respectively. By suitably adjusting the length of this cable, the cyclist varies the width of the oscillation angle of the handle-bar, within preset limits, proportionally to the of his arms' pressure.

From the above thanks, to the use of the mechanism according to the invention, the cyclist has a wide range of choice; for example: he can combine the pressure on the pedals with the arms' pressure, thereby making both the wheels drive, choosing, among various positions that can be given to the handle-bar, that which, from time to time, results as the most suitable. Furthermore, it is also possible to use only the front wheel as the drive wheel temporarily stopping the movement of the pedals and finally, it is possible to remove the chain 7 from the front wheel 8 and, by means of the catch 14, block the handle-bar at the end of any swinging movement phase, and return to use the only rear wheel.

The part 5a of the lever 5, Fig. 5, can be advantageously be provided with more than one points for attaching the chain 7 in order to obtain a variable transmission ratio of the wheel - I -.

Furthermore, one can understand that the part 5 can be supplied with a pair of symmetrical branches 5a, connected to single portions of chain associated to the relevant free wheels, juxtaposed and coaxial with respect to the front wheel. This solution can be advantageously used both for activating the oscillating movement phases given to the handle-bar and for applying the mechanism provided with a couple of idle front wheels; in this case the lever 5, 5a will be of an appropriate shape and size, particularly as far the wheelbase distance of its parallel branches is concerned.

## Claims

1. Mechanism for making the front wheel of bicycles and of similar vehicles a driving wheel powered by means of the movement of the arms and having transmission means in the form of a chain connected to the front wheel, wherein the handle-bar (E) can be detached from the steering column (F) to which it is normally locked by stopping means (11,14,15) on both, one part of said stopping means being constituted by a catch (14) that is retractable by means of working control (16,17,18) and in the detached position of the handlebar the chain can transmit the swinging movement given to the handle-bar to at least one free wheel (8) coaxial and fixed to the front wheel (I): characterized by the fact that the handle-bar (E) is fixed to an up-side-down "U" shaped lever (5) hinged to the upper part of the front fork (H); the transmission means in the form of the chain are drivingly connected to at least one arm (5a) of the "U" shaped lever and pass around an idler wheel.

2. Mechanism according to Claim 1, characterized by the fact that the up-side-down "U" shaped lever fixed to the handle-bar is provided with parallel arms (5,5a) having different lenghts; the end of the longer arm (5a) is hinged to the end of a section of the chain (7) mounted astride a free wheel (8) coaxial and fixed to the front wheel (I); the opposited end of said chain is anchored to a return spring (12) which reacts to the swinging movement of the handle-bar (E), on the vertical plane, obtainable by means of the movement of the arms.

3. Mechanism according to Claim 1, characterized by the fact that the up-side-down "U" shaped lever, fixed to the handle-bar (E) is transversally hinged rotatable to the top of the front fork (H).

4. Mechanism according to Claim 1, characterized by the fact that when the handle-bar (E) is inactive it is blocked, in a drive position, by a catch (14) while the arms of the lever (5,5a) are adjacent to the front fork of the bicycle.

5. Mechanism according to Claim 1, characterized by the fact that a retractable catch (14) controls the position of the handle-bar (E) and allows same to pass from the stop position to the angularly mobile position, said catch is connected to a flexible cable (18) controlled by a control device (16) with the manoeuvring lever (17); said control device is mounted on the handle-bar (E), in a conveniently accessible position.

## Patentansprüche

1. Vorrrichtung zur Umwandlung des Vorderrads eines Fahrrads und ähnlicher Fahrzeuge in ein durch die Bewegung von Armen angetriebenes Treibrad und mit Kettenantriebselementen, die mit dem Vorderrad verbunden sind, wobei die Lenkstange (E) von der Lenksäule (F) abgekuppelt werden kann, mit der sie normalerweise durch Klemmelemente (11, 14, 15) an beiden Seiten verbunden ist, da sie ein Teil besagter Klemmelemente ist, die aus einer durch Funktionsregler (16, 17, 18) einziehbaren Feststellvorrichtung (14) bestehen. In der von der Lenksäule ausgekuppelten Stellung kann die Kette die der Lenksäule gegebene Schwingbewegung an wenigstens eine am Vorderrad (I) befestigte freie Rundlaufscheibe (8) übertragen, dadurch gekennzeichnet, daß die Lenkstange (E) an einem umgekehrt U-förmigen, durch Schanier am Oberteil der vorderen Gabel (H) angebrachten Hebel (5) befestigt ist; die Kettenantriebselemente sind zur Übertragung mit wenigstens einem Arm (5a) des U-förmigen Hebels verbunden und laufen um eine Freilaufscheibe herum.

2. Vorrichtung gemäß des Patentanspruchs 1, dadurch gekennzeichnet, daß der umgekehrt U-förmige, an der Lenkstange befestigte Hebel mit Parallelarmen (5, 5a) von verschiedener Länge ausgerüstet ist; das Ende des längeren Armes (5a) ist durch Scharnier mit dem Endsegment der rittlings auf eine freie Rundflaufscheibe (8) montierten und am Vorderrad (I) befestigten Kette (7) verbunden; das entgegengesetzte Ende besagter Kette ist an einer Rückzugsfeder (12) verankert, die auf die Schwingbewegung der Lenkstange (E) auf einer Vertikalebene reagiert, erzielbar durch die Armbewegung.

3. Vorrichtung gemäß Patentanspruch 1, dadurch gekennzeichnet, daß der an der Lenkstange (E) befestigte umgekehrt U-förmige Hebel durch Scharniere querverbunden und am oberen Ende der Gabel (H) drehbar ist.

4. Vorrichtung gemäß Patentanspruch 1, dadurch gekennzeichnet, daß die Lenkstange (E) bei Stillstand durch eine Feststellvorrichtung (14) gesperrt ist, während die Hebelarme (5, 5a) an der Vordergabel des Fahrrads anliegen.

5. Vorrichtung gemäß Patentanspruch 1, dadurch gekennzeichnet, daß eine einziehbare Feststellvorrichtung (14) die Stellung der Lenkstange (E) steuert und es gleichzeitig gestattet, von einer Arretierstellung auf eine bewegliche Winkelstellung überzugehen; besagte Feststellvorichtung ist mit einem biegsamen, durch eine Steuervorrichtung (16) über einen Einstellhebel (17) betätigtes Kabel verbunden; diese Steuervorrichtung ist in einer leicht zugänglichen Stellung auf die Lenkstange (E) montiert.

## Revendications

1. Mécanisme pour tranformer la roue avant d'une bicyclette et de véhicules similaires en une roue motrice, actionnée au moyen du mouvement des bras et ayant les éléments de transmission du type à chaîne, reliés à la roue avant, dans lequel le guidon (E) peut être détaché de la colonne de direction (F) à laquelle ce premier est normalement raccordé par des éléments de blocage (11, 14, 15), placés sur les deux pièces ; une partie de ces éléments de blocage est constituée d'un arrêt (14) rétractile au moyen d'un régulateur de fonctionnement (16, 17, 18) et dans la position où le guidon est détaché, la chaîne peut transmettre le mouvement oscillant, donné au guidon, à au moins un disque libre (8) coaxial et fixé à la roue avant (I), caractérisé par le fait que le guidon (E) est fixé à un levier en forme de "U" renversé (5), articulé sur la partie supérieure de la fourche avant (H) ; les éléments de transmission du type à chaîne sont reliés, pour la transmission à au moins un bras (5a) du levier en forme de "U" et passent autour d'un disque libre.

2. Mécanisme selon la revendication 1, caractérisé par le fait que le levier en forme de "U" renversé, fixé au guidon, est doté de bras parallèles (5, 5a) d'une longueur différente : l'extrémité du bras le plus long (5a) est articulée sur l'extrémité de la section de la chaîne (7), montée à cheval sur un disque libre (8) coaxial et fixée sur la roue avant (I) ; l'extrémité opposée de la dite chaîne est ancrée à un ressort de rappel (12) lequel réagit au mouvement oscillatoire du guidon (E) sur un plan vertical, pouvant être obtenu au moyen du mouvement des bras.

3. Mécanisme selon la revendication 1, caractérisé par le fait que le levier en forme de "U" renversé, fixé au guidon (E), est articulé transversalement et peut tourner au sommet de la fourche avant (H).

4. Mécanisme selon la revendication 1, caractérisé par le fait que quand le guidon (E) est inactif, ce premier est bloqué dans la position de transmission par un arrêt (14) alors que les bras du levier (5,5a) sont proches de la fourche avant de la bicyclette.

5. Mécanisme selon la revendication 1, caractérisé par le fait qu'un arrêt rétractile (14) commande la position du guidon (E), et permet à ce dernier de passer de la position de blocage à la position de mobilité angulaire ; ledit arrêt est relié à un câble flexible, commandé par un dispositif de commande (16), à l'aide d'un levier de réglage (17). Ce dispositif de commande est monté sur le guidon (E)et est facilement accessible.
